(19) **Europäisches Patentamt**

**European Patent Office**

**Office européen des brevets**

(11) **EP 1 065 775 A2**

(12) **EUROPEAN PATENT APPLICATION**

(43) Date of publication:
03.01.2001 Bulletin 2001/01

(51) Int. Cl.$^7$: **H02J 7/34**

(21) Application number: **00113416.2**

(22) Date of filing: **23.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.06.1999 SE 9902460**

(71) Applicant:
**Laboratoire d'Electronique Industrielle
Departement d'Electricité EPFL
1015 Lausanne (CH)**

(72) Inventor: **Rufer, Alfred
1138 Villars-sous-Yens (CH)**

(74) Representative:
**Johansson, Lars et al
Patech S.A.
Case Postale 25 ps
1138 Villars-sous-Yens (CH)**

(54) **Electrical energy storage system with at least two energy sources having different power characteristics**

(57) Electrical energy storage systems comprising at least two different energy sources having different, complementary power characteristics, e.g. a battery and a capacitor, especially a so called supercapacitor or a fuel cell and a lead battery etc.. The system includes a static converter for use at constant output voltage and associated control circuits.

FIG 3

**Description**

**Technical field**

This invention relates to electrical energy storage systems comprising at least two different energy sources, e.g. a battery and a capacitor, especially a so called supercapacitor or a fuel cell and a lead battery etc..The system includes a static converter for use at constant output voltage and associated control circuits.

**Background art**

There are many applications in which the electrical energy supply can not be handled by one single energy source without considerable drawbacks. The energy sink, e.g. an electrical motor, could have very different demands for power during an operation cycle depending on the application. This could mean that the single energy source is not working under optimum conditions all the time. Thus, it would be of interest to look for solutions to this problem including combinations of energy sources with different and complementary power characteristics.

**Brief description of the invention**

The inventive idea thus covers energy storage systems with at least two different energy sources with complementary characteristics. The energy sources could thus be different types of capacitors, batteries, fuel cells etc. or combinations of sources from these categories.

To illustrate the operation of a system according to the invention without limiting the scope of protection embodiments will be described in the following including a battery and a so called supercapacitor.

Supercapacitors represent one of the most interesting new developments in the field of energy storage. A series connection of such capacitors could be used together with a conventional static converter to create an energy source.

According to the idea of the invention such a capacitor could now be combined with a classical electrochemical battery for providing the possibility of a high instantaneous output power from the combined system. Such a system shows advantages of the two individual energy sources. Larger amount of energy with limited instantaneous output power are the classical properties of accumulators in view of long cycle life. In the combined system the battery with its limitations is assisted by the supercapacitor for meeting high instantaneous power demand.

It is once again emphasised that combinations of other sources could be envisaged as well, for the same or another object.

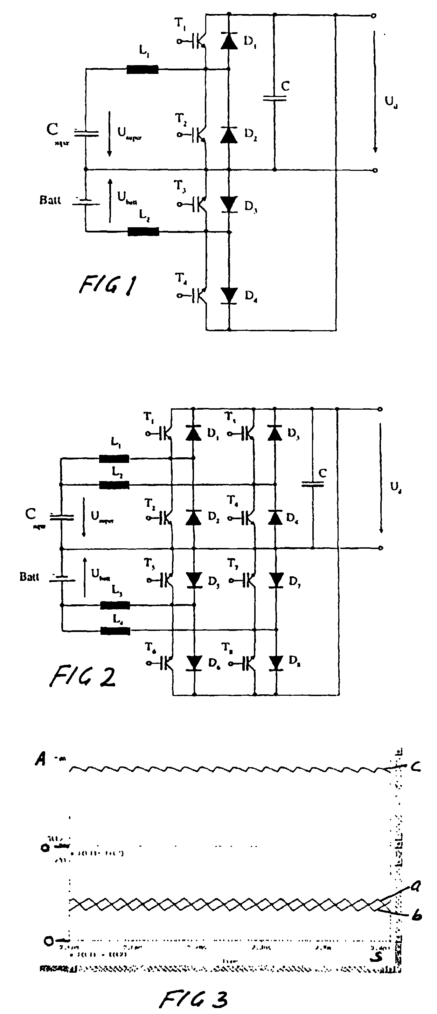

The embodiment uses a combined storage device, with associated static converters to give a power supply operating with in this case constant output voltage. (figure 1)

One embodiment of the invention uses a parallel configuration of the static converter with individual channels operating in the so called continuous mode for decreasing the ripple of the current through the energy sources. (figures 2 and 3)

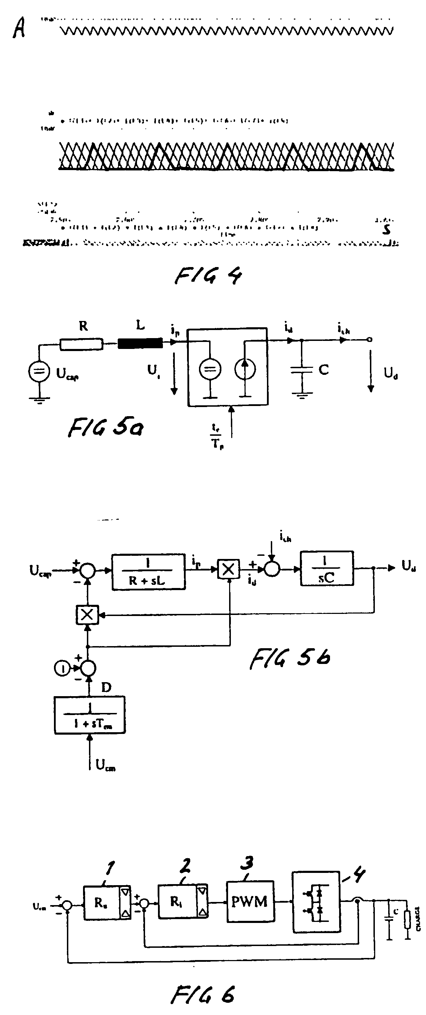

Another embodiment of the invention uses the same configuration of the static converter with the channels operating in the so called discontinuous or intermittent mode. This gives a current through the supercapacitor and the battery with even lower ripple, even with the use of small coupling inductors. Low ripple is of interest as the ripple is associated with losses in the energy sources. (figures 2 and 4)

An additional object of the present invention is to provide an energy source having low weight and low commutation losses.

One advantage of a system according to the invention is the high efficiency, in the special configuration with parallel channels.

These and further objects are achieved by means of an energy storage system having the characteristics according to the appended claims.

**Brief description of the figures**

Other objects, uses and advantages of this invention will be apparent from the reading of this description which proceeds with reference to the accompanying drawings forming part thereof and wherein:

Figure 1 shows in a schematic form two mirrored DC-DC converters for constant voltage supply from a battery and a supercapacitor

Figure 2 shows a configuration with parallel channels for decreasing the current ripple

Figure 3 shows certain current waveforms in the converter according to figure 2 operating in the continuous mode

Figure 4 shows certain current waveforms in the converter according to figure 2 operating in the discontinuous mode

Figure 5a shows the equivalent circuit of one channel of the DC-DC conversion

Figure 5b shows a structural diagram of the non linear model

Figure 6 shows a block diagram of a controller

Figure 7 shows the step response for the output voltage control with cascade current control

Figure 8 shows a block diagram of a controller for current sharing and voltage control

Figure 9 shows current and voltage waveforms in a system according to one embodiment of the invention

**Detailed description of the invention**

Figure 1 shows in a schematic form two mirrored DC-DC converters for constant voltage supply from a battery and a supercapacitor connected in parallel seen from the output. One converter is associated with the battery and the other with the capacitor. The type of static converter, viewed as separate unit, is known as such which means that no detailed description has to be included here. The battery could include one or more separate cells and the supercapacitor could include several separate capacitors connected in series.

For a supercapacitor, the amount of stored energy is related to the square of its voltage magnitude. The output voltage of the electrochemical battery, also varies with the status of the charge.

In the setup or boost operation a common output capacitor C is fed from the supercapacitor and the battery through the respective DC-DC converter. The load is connected across the output capacitor. Energy is thus transferred from the left to the right in the figure. In the so-called step-down mode the supercapacitor and the battery could be recharged by transferring energy through the reversible converters in the opposite direction.

Energy can also be transferred between the two sources if convenient.

The characteristics of the converters could be controlled by means of the control signals turning the transistors $T_1$ - $T_4$ on and off. This switching is associated with commutation losses mainly in the transistors $T_1$ - $T_4$ which losses are thus depending on the switching frequency.

The ripple of the current through the battery and the supercapacitor is also associated with losses. A way to keep this ripple low is to increase the inductances $L_1$ and $L_2$. In view of the weight it is however of interest to keep these inductances small.

Figure 2 shows a configuration of the mirrored converters with parallel channels for decreasing the ripple in the current through the battery and the supercapacitor.

Each parallel channel e.g. $T_1$, $T_2$, $D_1$, $D_2$, is in the discharge mode fed through its associated inductor e.g. $L_1$ from the corresponding energy source. By phase shifting the control pulses to the transistors the continuous sawtooth formed currents through the inductors will add to the total current through the energy source as shown in figure 3.

This configuration brings a significant reduction of the ripple in the current through the energy sources compared to a configuration with only one channel. It would of course be possible to use more than two parallel channels in each converter.

Figure 3 shows the current waveforms in the converter according to figure 2 with two parallel channels operating in the continuous mode. The curves a and b represent the currents through the inductors $L_1$ and $L_2$ in the upper converter associated with the supercapacitor. The curve c represents the total current through the supercapacitor. Analogue relations would result from an analysis of the lower converter associated to the battery. It should be noted that all the currents are continuos.

This continuous mode is however characterised by high commutation losses. If this mode of operation of the converters is chosen then there could be a need for adapted heat sinks for the transistors. Relatively high values for the inductances would also be necessary which together would add to the weight and volume of the system.

In figure 4 are shown the corresponding currents in a system having eight parallel channels. Each channel is in this case operating with intermittent or discontinuous current but the resulting current through the supercapacitor and battery will still be continuous and with very low ripple compared to a system with only two channels. The discontinuous current through one inductor has been marked in the figure. As said before, in order to keep the internal losses low in the battery and the supercapacitor it is essential to decrease the ripple as much as possible.

In a system for a discontinuous current mode in the individual channels very small inductors could be used. The current turn-on conditions for the transistors are ideal because there is no simultaneous current in the associated diode. This means that this operation mode will give very low commutation losses.

For the intermittent operation mode of the mirrored reversible DC-DC converter, a special logic is needed, with activation of upper and lower devices with a set-value current criteria and time delay. This means that both energy sources could be connected to the load at the same time or alternatively. Such a logic will be described in the following.

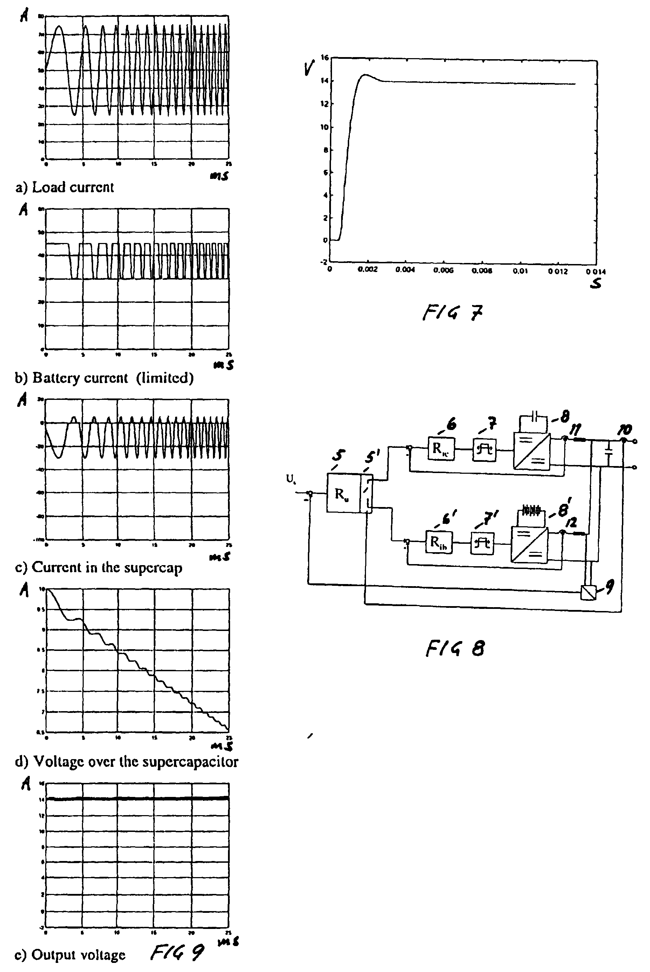

Based on the circuit illustrated in figure 5a, the equations for the system components can be defined in order to get a global non linear model, for the synthesis of the control system, and for the analysis of the system stability.

For the input circuit:

$$U_{top} - R \cdot I_p - L \frac{dI_p}{dt} - U_\iota = 0$$

For the reversible converter:

$$U_\iota = (1 - D) \cdot U_d$$

and

$$I_d = (1 - D) \cdot I_p$$

For the common capacitor:

$$U_d = \frac{1}{C} \int (I_d - I_{ch}) dt$$

The control via a PWM modulator can be represented by a small time constant:

$$D(s) = \frac{1}{1 + s \cdot T_{cm}}$$

In figure 5b a structural diagram is given for the DC-DC interface or converter of the supercapacitor. In that case, the variation of the supercapacitor voltage is considered as a perturbation.

The corresponding control circuit is shown in figure 6. It comprises cascaded current and voltage controls. For the parameter settings of the conventional PI controllers 2, the considerations are made for the maximum gain in linear situations according usual stability criteria.

There are two loops the main loop or voltage loop and the internal or current loop. The current is measured on the output from the converter 4 in the internal current loop and fed back to the input of the current regulator 2 which controls a pulse width modulator (PWM) 3 delivering the control pulses to the transistors of the converter 4.

The voltage at the output which is to be kept constant is also measured and fed back to be compared to a set value $U_{cm}$ and the difference is fed to a voltage regulator 1.

In figure 7 the dynamic behaviour of the closed loop operation of the voltage control is shown. In that case, the design of the parameters of the current controller is based on the non-linear model of figure 5. The closed-loop behaviour of the minor current loop is modelled with an equivalent time constant.

Figure 8 shows one embodiment of the energy storage system according to the invention.

The output voltage of the combined storage device is possible to control by each current source, i.e. by the converter-interface of the battery or by the converter-interface of the supercapacitor. The control of the output voltage, $U_{out}$, could like in this case be done by only one superposed voltage controller, which is connected to one only of the two current sources at the same time. This demands the use of a switching device, controlled by current-level detection devices. A possible control scheme is given at figure 8.

A voltage controller 5 has an integrated switching device 5' at the output controlled by the load current measured in the point 10. This switch is by means of its position deciding which source, battery or capacitor, is going to deliver energy or current to the output capacitor.

In each of the following current loops a current regulator 6 is arranged followed by a pulse width modulator 7 (PWM) delivering the control signals to the converter 8 and 8'.

The source currents from the two sources, the battery and the supercapacitor, are measured at the outputs 11, 12 from the respective converter 8, 8' and are fed back to the input of the respective current regulator 6, 6'.

The output voltage over the capacitor C is measured by the unit 9 and fed back to the input of the voltage regulator 5.

In one of the embodiments of the invention the battery current has a lower and an upper limit. A simulation of a strongly varying load current is given in figure 9. The output voltage is kept constant at 14 volts, cf. figure 9e, and the current is shared according to the lower and upper limits. In figure 9, both the battery and the supercapacitor currents are shown. The supercapacitor voltage, illustrates the alternating unloading and loading phenomena.

When the transistors T1, T2 ...are of a special MOSFET type with very low internal resistance the physical components D1, D2....would not be necessary. The internal capacitance and internal diode of the respective transistor will take over the function of the diodes D1, D2... during the transition period. Current in the negative direction is taken over by the transistor itself. In order to implement such a solution the voltage across the transistor has to be measured in order to set the correct trigg-time. By means of this embodiment the losses could be decreased even more.

**Claims**

1.  Electrical energy source **characterised in that** it comprises at least one battery and at least one supercapacitor connected in series and a static converter for each of said battery and supercapacitor operated to give constant output voltage.

FIG 1

FIG 2

FIG 3

A

FIG 4

FIG 5a

FIG 5b

FIG 6

a) Load current

b) Battery current (limited)

c) Current in the supercap

d) Voltage over the supercapacitor

e) Output voltage    F/G 9

F/G 7

F/G 8